# DEMANDE DE BREVET EUROPEEN

(11) **EP 1 195 958 A1**
(43) Date de publication de la demande: **10.04.2002**
(21) Numéro de dépôt: 01402481.4
(22) Date de dépôt: 27.09.2001
(51) Int. Cl.: H04L 12/64, H04Q 11/04

(54) **Réseau de communication mixte**

(30) Priorité: 03.10.2000 FR 0012562
(71) Demandeur: SAGEM S.A., 75015 Paris (FR)
(72) Inventeur: Madenian, Marc, 91190 Gif sur Yvette (FR); Penalver, Georges, 78700 Conflans Sainte Honorine (FR)
(74) Mandataire: Fruchard, Guy

(57) **Abrégé**

Le réseau de communication mixte comporte un réseau d'entreprise (1, 2) fonctionnant selon un mode paquets et comprenant des bornes de liaison (7) permettant de relier des terminaux téléphoniques (5) au réseau d'entreprise, et un réseau téléphonique (9) fonctionnant selon un mode circuit, au moins une des bornes de liaison (7) étant reliée au réseau téléphonique et étant adaptée à effectuer une conversion entre le mode paquets et le mode circuit.

## Description

La présente invention concerne un réseau de communication mixte.

On sait qu'en raison du développement extraordinaire du réseau Internet, ainsi que des techniques de transmission de la voix sur Internet, dénommée VoIP, il est de plus en plus fréquent d'utiliser pour les réseaux d'entreprise (intranet), lesquels fonctionnent selon un mode paquets comme le réseau Internet, un protocole de communication identique à celui utilisé sur le réseau Internet, ce protocole étant dénommé IP. Il est ainsi possible d'utiliser sur le réseau d'entreprise les techniques VoIP et d'assurer une liaison entre le réseau d'entreprise et le réseau Internet par un simple routeur.

Par ailleurs il est connu de réaliser un réseau de communication mixte en assurant une liaison entre un réseau d'entreprise et le réseau téléphonique commuté, dénommé RTC, lequel fonctionne en mode circuit selon un protocole qui est généralement un protocole de multiplexage par division dans le temps, dénommé TDM. La liaison entre le réseau d'entreprise et le réseau RTC est réalisée par une plate-forme de conversion des signaux IP en signaux TDM et réciproquement afin de permettre une communication entre le réseau d'entreprise et le réseau RTC.

A l'heure actuelle, la réalisation d'un réseau de communication mixte implique donc l'implantation d'une plate-forme de conversion même si le réseau d'entreprise comporte un seul terminal téléphonique fonctionnant selon une technique VoIP. Afin d'éviter une saturation de la plate-forme de conversion lors d'une augmentation du nombre de terminaux VoIP, il est généralement nécessaire de prévoir une plate-forme de conversion apte à traiter un volume important de communications, et même de prévoir une sécurisation par une redondance d'alimentation, d'unité centrale... , ce qui conduit à un investissement de départ très élevé par rapport au nombre de terminaux VoIP en service. Cet investissement de départ est souvent inadapté au monde de l'entreprise.

Selon l'invention, on prévoit un réseau de communication mixte comportant un réseau d'entreprise fonctionnant selon un mode paquets et comprenant des bornes de liaison permettant de relier des terminaux téléphoniques au réseau d'entreprise, et un réseau téléphonique fonctionnant selon un mode circuit, au moins une des bornes de liaison étant reliée au réseau téléphonique et étant adaptée à effectuer une conversion entre le mode paquets et le mode circuit.

Ainsi, chaque fois qu'un terminal téléphonique VoIP est implanté dans le réseau d'entreprise, il suffit pour permettre une mise en relation avec le réseau RTC d'ajouter dans la borne de liaison correspondante un organe de conversion adapté à effectuer une conversion entre le mode paquets et le mode circuit et de relier cette borne de liaison au réseau RTC, généralement par l'intermédiaire de l'autocommutateur implanté dans l'entreprise et relié au réseau RTC. En pratique il existe généralement dans les entreprises une prise téléphonique immédiatement adjacente à une prise réseau de sorte que la liaison du boîtier de liaison avec le réseau téléphonique peut être réalisée de façon très simple en branchant un câble supplémentaire entre le boîtier de liaison et la prise téléphonique correspondante. L'investissement nécessaire pour la transformation de chaque borne de liaison est faible, de sorte que la charge initiale de l'entreprise est faible si le nombre de terminaux VoIP est lui-même faible. La charge globale se répartit donc dans le temps en fonction de l'accroissement du nombre de terminaux VoIP raccordés au réseau RTC.

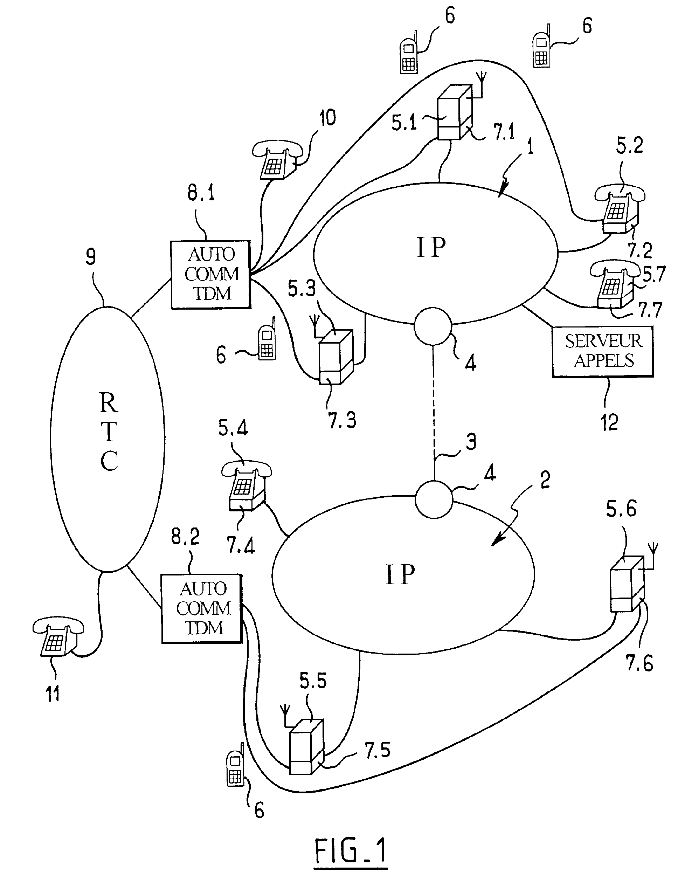

D'autres caractéristiques et avantages de l'invention apparaîtront à la lecture de la description qui suit d'un mode de réalisation particulier non limitatif de l'invention, en référence à la figure unique ci-jointe qui est une représentation schématique d'un mode de réalisation du réseau de communication mixte selon l'invention.

Le réseau de communication mixte illustré comporte de façon connue en soi un réseau d'entreprise comprenant deux réseaux locaux 1 et 2 fonctionnant en mode paquets, par exemple selon un protocole TCP/IP, et reliés l'un à l'autre par une ligne dédiée 3, et/ou via un réseau opérateur du type Frame/Relay, ATM, IP/PPP... associés à des routeurs 4. Le réseau d'entreprise comporte des terminaux téléphoniques VoIP portant la référence numérique générale 5 et des références numériques particulières 5.1, 5.2... permettant de les identifier de façon particulière. Les terminaux 5.1, 5.3, 5.5 et 5.6 sont des terminaux sans fil, par exemple de type DECT, PCS, Bluetooth ou IEEE 802,11... associés à des postes mobiles 6 tandis que les terminaux 5.2, 5.4 et 5.7 sont des terminaux fixes.

Chaque terminal 5 comporte une borne de liaison comportant la référence numérique générale 7 et la référence numérique particulière 7.1, 7.2... correspondant au terminal associé. Chacune des bornes de liaison 7 est équipée d'une interface permettant de relier le terminal téléphonique correspondant au réseau d'entreprise.

Selon l'invention, certains des terminaux VoIP 5, et plus particulièrement les terminaux 5.1 à 5.3, 5.5 et 5.6 dans l'exemple illustré, comportent des bornes de liaison 7 correspondantes qui sont en outre reliées à un autocommutateur généralement désigné en 8, et plus particulièrement 8.1 pour le réseau local 1 et 8.2 pour le réseau local 2, eux-mêmes reliés à un réseau traditionnel RTC 9. Le réseau de communication selon l'invention peut bien entendu comporter d'autres terminaux téléphoniques tels qu'un terminal téléphonique traditionnel 10 relié à l'autocommutateur 8.1 et le réseau RTC est relié à des terminaux téléphoniques externes à l'entreprise tel que le terminal téléphonique 11.

Les bornes de liaison 7 reliées au réseau RTC 9 sont équipées d'une interface permettant une conversion entre le mode paquets des signaux transmis sur le réseau d'entreprise et le mode circuit des signaux transmis sur le réseau RTC 9. Cette interface assure une conversion conformément aux plates-formes de conversion connues mais elle a une capacité limitée à ce qui est nécessaire pour assurer la transmission des communications passant par le terminal téléphonique correspondant. A ce propos, bien que les terminaux téléphoniques aient été représentés reliés aux autocommutateurs par une seule ligne téléphonique, on peut prévoir plusieurs lignes téléphoniques reliant une borne de liaison à un autocommutateur en particulier lorsque le terminal téléphonique correspondant est un terminal sans fil.

Dans le mode de réalisation illustré, le réseau de communication mixte selon l'invention comporte en outre un serveur d'appels 12 relié au réseau d'entreprise local 1 et destiné à gérer de façon connue en soi tant les appels internes au réseau d'entreprise que les appels du réseau d'entreprise vers le réseau RTC ou les appels venant du réseau RTC vers le réseau d'entreprise, en tenant compte de la structure particulière du réseau considéré. En particulier pour un appel lancé à partir du terminal téléphonique 5.7 vers un terminal téléphonique externe relié au réseau RTC alors que la borne de liaison 7.7 n'est pas reliée au réseau RTC, le serveur d'appels 12 sélectionne les bornes de liaison disponibles, par exemple la borne de liaison 7.2 pour acheminer l'appel vers le réseau RTC. On notera à ce propos que chaque borne de liaison est associée à un terminal téléphonique VoIP mais elle n'est pas pour autant dédiée strictement à ce terminal.

Selon un autre aspect de l'invention, le serveur d'appels 12 peut en outre être supprimé et remplacé par une gestion autonome des appels par chacune des bornes de liaison 7. Selon un premier mode de réalisation de cette gestion autonome chaque borne de liaison 7 est informée, par exemple par des informations incluses dans des signaux de gestion habituels du réseau d'entreprise tels que des signaux SNMP, de l'état de communication des autres bornes de liaison avec le réseau téléphonique. De préférence, la borne de liaison dispose d'une table de routage à moindre coût de sorte que lorsqu'un appel est placé par un terminal téléphonique, par exemple un appel provenant d'un des postes mobiles 6 associé au terminal téléphonique 5.1 souhaitant entrer en relation avec le terminal téléphonique 11, la borne de liaison 7.1 établit de façon dynamique une liste des bornes de liaison capables d'écouler l'appel en classant les bornes retenues selon l'ordre du moindre coût. Par exemple, dans le mode de réalisation illustré, et en supposant que la liaison entre l'autocommutateur 8.2 et le terminal téléphonique 11 soit considérée comme une liaison locale tandis que la liaison entre le commutateur 8.1 et le terminal téléphonique 11 soit une liaison de voisinage ou une liaison nationale, la table de routage de la borne de liaison 7.1 permettra à celle-ci de déterminer qu'il est préférable d'établir la communication par l'intermédiaire d'une des bornes de liaison du réseau local 2 et choisira donc l'une des bornes de liaison 7.5 ou 7.6 selon l'état d'occupation de celles-ci. Dans le cas où une borne de liaison sélectionnée est occupée, la borne appelante sélectionne la borne suivante dans la liste jusqu'à épuisement de celle-ci. Si dans l'exemple donné la fonction de moindre coût est désactivée, la borne de liaison 7.1 choisit la liaison la plus directe, c'est-à-dire la liaison par l'autocommutateur 8.1 dans l'exemple envisagé. A ce propos on notera également que si la ligne TDM associée à la borne de liaison est occupée, il reste possible pour la borne de liaison d'établir une connexion avec le réseau RTC en passant par le réseau d'entreprise et en sortant de celui-ci par la borne de liaison associée à un autre terminal téléphonique.

Selon un second mode de réalisation de la gestion autonome les bornes de liaison ne reçoivent a priori aucune information sur l'existence ou l'état des autres bornes de liaison mais chaque borne de liaison est adaptée à échanger des signaux de gestion d'appels avec les autres bornes de liaison. Les signaux de gestion d'appels comprennent alors une demande envoyée sur le réseau d'entreprise selon le protocole IP à toutes les bornes du réseau d'entreprise, de préférence selon une diffusion automatique à toutes les bornes de liaison du réseau (Multicast), et une réponse des autres bornes, chaque borne pouvant acheminer un message de réponse selon le protocole IP (Unicast) par le réseau d'entreprise. De préférence dans ce cas les signaux de gestion d'appels comprennent une évaluation du coût d'établissement d'une communication par la borne émettant le message de réponse, ce qui permet à la borne appelante d'établir une liste des bornes disponibles en classant celles-ci dans l'ordre des coût croissants. Afin de limiter le temps de traitement des appels, la réception des réponses à une demande est limitée par un temporisateur éventuellement réglable en tant que paramètre de l'installation. Pour lancer l'appel la borne appelante sélectionne tout d'abord la première borne de la liste et dans le cas où celle-ci n'est plus disponible, par exemple si une autre demande a été servie entre-temps, la borne appelante sélectionne la borne suivante dans la liste. Pour réduire le risque de confits d'attribution on peut également prévoir de bloquer temporairement l'accès à une borne de liaison ayant envoyé une réponse lorsque l'évaluation de coût associée à la demande est de faible niveau.

Bien entendu, l'invention n'est pas limitée au mode de réalisation décrit et on peut y apporter des variantes de réalisation sans sortir du cadre de l'invention tel que défini par les revendications.

En particulier, le réseau selon l'invention peut être utilisé avec des postes mobiles 6 pouvant entrer en communication soit avec un terminal sans fil 5 du réseau d'entreprise, soit avec une station de base d'un réseau de radiocommunication cellulaire. Dans ce cas il est intéressant de prévoir dans la borne de liaison une fonction d'appels à moindre coût effectuant une comparaison entre le coût d'un appel passant par le réseau RTC en tenant compte de la structure du réseau d'entreprise, et le coût d'un appel passant par le réseau de radiocommunication cellulaire.

Bien que l'invention ait été décrite en relation avec des bornes de liaison reliées au réseau RTC par l'intermédiaire d'un autocommutateur 8, l'invention s'applique également à des bornes de liaison directement reliées au réseau RTC.

Bien que les bornes de liaison aient été illustrées de façon intégrée aux terminaux téléphoniques elles peuvent également être réalisées de façon séparée.

## Revendications

1. Réseau de communication mixte comportant un réseau d'entreprise (1, 2) fonctionnant selon un mode paquets et comprenant des bornes de liaison (7) permettant de relier des terminaux téléphoniques (5) au réseau d'entreprise, et un réseau téléphonique (9) fonctionnant selon un mode circuit, **caractérisé en ce qu'**au moins une des bornes de liaison (7) est reliée au réseau téléphonique et est adaptée à effectuer une conversion entre le mode paquets et le mode circuit.

2. Réseau de communication selon la revendication 1, **caractérisé en ce qu'**il comporte plusieurs bornes de liaison (7) reliées au réseau téléphonique, et un serveur d'appels (12) relié au réseau d'entreprise et assurant une recherche de la borne de liaison (7) la plus appropriée pour acheminer un appel.

3. Réseau de communication selon la revendication 1, **caractérisé en ce qu'**il comporte plusieurs bornes de liaison (7) reliées au réseau téléphonique (9) et **en ce que** le réseau d'entreprise est adapté à informer chaque borne de liaison (7) d'un état de communication des autres bornes de liaison avec le réseau téléphonique (9).

4. Réseau de communication selon la revendication 3, **caractérisé en ce que** les bornes de liaison (7) comportent une table de routage à moindre coût.

5. Réseau de communication selon la revendication 1, **caractérisé en ce qu'**il comporte plusieurs bornes de liaison (7) reliées au réseau téléphonique (9), chaque borne de liaison étant adaptée à échanger des signaux de gestion d'appels avec les autres bornes de liaison (7) par le réseau d'entreprise (1, 2).

6. Réseau de communication selon la revendication 5, **caractérisé en ce que** les signaux de gestion d'appels comprennent une évaluation du coût d'établissement d'une communication par une borne de liaison (7) émettant une réponse à une demande d'appel.
